# EUROPEAN PATENT APPLICATION

(11) **EP 1 106 257 A1**
(43) Date of publication of application: **13.06.2001**
(21) Application number: 99204241.6
(22) Date of filing: 10.12.1999
(51) Int. Cl.: B03D 1/14, B03B 11/00, F16K 15/02

(54) **Device for homogenizing and diffusing liquids for flotation clarifiers**

(71) Applicant: VELO Spa, I-31030 Altivole, Treviso (IT)
(72) Inventor: Velo, Antonio, 31030 Caerano San Marco, Treviso (IT)
(74) Representative: Dragotti, Gianfranco

(57) **Abstract**

The invention relates to a homogenizing and diffusing device (10) for supplying a liquid to be clarified, such as for example the must of wine, fruit juice and the like.

This diffuser consists of an external casing (2) which defines internally an outflow path for the liquid, extending between an inlet (20) and an outlet (26) opposite which the frustoconical head of an obturator is situated; along the path losses in head and turbulence occur, which allow the formation, inside the clarification apparatus, of gas bubbles in the liquid mass, having a uniform distribution.

The obturator also comprises a stem (30) projecting from the casing (2) which has, arranged around it, a spring (40) compressed by a nut (41), the position of which may be varied by tightening or loosening it, so as to adjust the resilient force which the spring transmits to the obturator.

## Description

The invention relates, according to a more general aspect thereof, to the clarification of alimentary and other liquids, namely to the particular treatment which must, wine and fruit juice and other similar fluids undergo in order to eliminate the presence therein of solid or colloidal particles which may alter their taste and make them cloudier.

More particularly, the invention relates to so-called clarification by flotation ; briefly this method consists in causing tiny bubbles of gas (air, N₂, O₂, CO₂) to adhere to the solid particles or the colloidal particles (after, however, making the latter heavier using bentonite or other similar substances commonly referred to as thickeners), said bubbles causing the particles to rise up to the free surface of the liquid to be clarified.

The foam resulting therefrom is then removed using various systems, while the clarified fraction of the liquid is drawn off from the bottom part of the liquid mass (contained in tanks or similar containers).

It can be understood that, in order to ensure the efficiency of the clarification process, the gas bubbles intended to transport to the surface the particles to be eliminated must be mixed uniformly with the liquid mass to be treated, which is supplied by a pump and is therefore at a not negligible pressure (a few bars). Obviously the conditions of introducing gas into the liquid stream affect both the uniformity of distribution and the size of the gas bubbles.

For example, it is known to use ejectors along the liquid flow which, however, do not allow effective control of the size of the bubbles and hence their distribution inside the liquid mass.

A further problem is that of introducing the liquid suspension, to which gas has been added, into the flotation vat. In fact, in this case, the liquid suspension passes instantly from the pumping pressure to the pressure of the liquid mass situated above the position of the outflow mouth. If this mouth is closed by a valve of the conventional type (such as a gate valve or a butterfly valve), on the one hand, a certain amount of time lapses before the desired effect - i.e. transportation, to the surface, of the particles and aggregates by the gas bubbles - is achieved and, on the other hand, clogging or blockages are likely to occur.

This is the technical field within which the present invention lies.

The present invention in fact relates to a device for homogenizing and diffusing a liquid suspension for supply into a flotation clarifier, allowing an as uniform as possible distribution of the gas which is both dissolved and suspended in the form of bubbles inside the liquid mass.

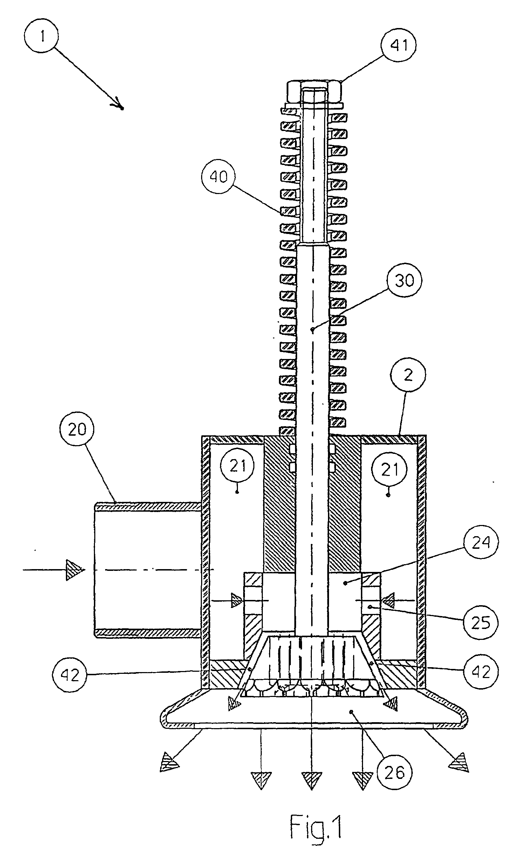

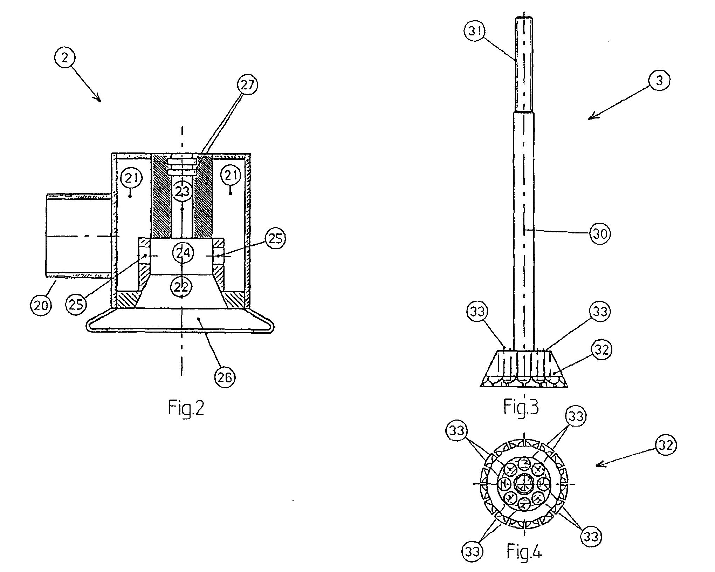

A preferred non-exclusive example of embodiment of this homogenization and diffusion device is now described, with reference to the accompanying figures in which the first figure (Fig. 1) shows a longitudinally sectioned view of the assembled diffuser, while the second and third figures (Figs. 2 and 3) show a view of respective separated parts thereof; Figure 4, finally, shows the part according to Fig. 3, from another angle.

As can be seen from the drawings, the example of the device according to the invention, which is denoted in its entirety by 1, consists of an external casing 2 inside which an obturator 3 is housed.

More precisely, the external casing 2 is connected upstream, by means of pipe not shown in the drawings, to an apparatus inside which the liquid suspension to be clarified is prepared, of the type for example described in Italian Patent for industrial invention No. 1,279,262 which belongs to the same Applicant of the present application. The contents of said patent are therefore incorporated in the contents of the present application, with specific reference being made thereto here.

In the homogenizing and diffusing device 1, the liquid to be clarified enters into the casing 2 through an inlet union 20 having its outlet an annular chamber 21; the latter surrounds a frustoconical seat 22 and a through-hole 23 between which a cylindrical cavity 24, described in greater detail below, is located.

In this connection it should be merely added that the annular chamber 21 communicates with the cavity 24 by means of a pair of radial openings and that the outlet 26 of the diffuser is located in the vicinity of the frustoconical seat 22 and preferably has a slightly flared shape.

The obturator 3 consists of a stem 30 having a first threaded end 31 with a frustoconical head 32 at the opposite end; said head has a series of channels 33 passing through it in the longitudinal direction.

As can be seen from Figure 1, in the assembled configuration the obturator 3 passes through the casing 2 with its stem 30 which is guided by the hole 23 and which, for this reason, is provided with two slots 27 for annular seals, while the frustoconical head 32 is seated in the corresponding seat 22. The stem 30 also has, mounted on it, a counter spring 40 which is compressed between the external surface of the casing 2 and a bolt nut 41, which is screwed onto the threaded end 31 of the stem 30.

Since the liquid present inside the chamber 24 is at a certain pressure (of the order of a few bars) during operation the head 32 remains separated from the surrounding seat 22, forming a passage 42 which extends in the form of a frustoconical ring around the head 32, allowing the outflow of a portion of the liquid present inside the chamber 24.

As regards the operating principle of the device described above, the following may be stated.

As mentioned above, the liquid to be clarified consisting of a suspension of solids to be separated and dissolved gas - except in the case of air, the nitrogen which obviously remains in the gaseous state - enters into the casing 2 through the inlet union 20 from where it then passes into the annular chamber 21; from here it comes into the cavity 24, passing through the openings 25.

The liquid present inside the cavity 24 emerges from the diffuser 1, flowing out entirely along the channels 33 in the head 32 of the obturator and through the passage 42. This occurs when the flowrate and pressure levels of the liquid are sufficiently low to allow complete disposal of the latter through the abovementioned channels.

If the pressure of the liquid acting on the head 32 of the obturator 3 should suddenly increase, fully compensating the counteracting force of the spring 40, the frustoconical head would be further separated from the seat 22, compensating for the increased pressure without problems and/or damage for the mechanical components of the device.

From the above explanation it can be understood how the path followed by the liquid inside the diffuser is fairly irregular; this results in the formation of turbulence with the associated loss in head which causes remixing of the gas with the liquid mass and therefore the homogeneous and uniform distribution thereof.

In particular, since the action of the spring 40 may be calibrated depending on the degree of tightening of the nut 41 on the threaded end 31, it can be deduced that it is possible to adapt the diffuser according to the invention to various liquids to be clarified (which may have a viscosity and other physical properties varying from case to case) and to the various operating conditions (flowrate, pressure, etc.) which may be required in each case.

This therefore makes the diffuser operationally flexible and easy to use with various clarifiers, with positive results in terms of the possibilities of application thereof; consequently it may be used, for example, in the case of apparatus such as that described in the already mentioned Italian patent No. 1,279,262, where the liquid with the dissolved gas is supplied to the flotation device using a rotary pump.

The diffuser may obviously be used also with apparatus different from that described in said patent, where the liquid containing the gas is supplied to the device using other systems; in particular, pressurization of the liquid may be obtained in any desired manner, for example using autoclaves, tanks designed to keep the liquid subjected to a hydraulic head and other devices.

Downstream of the device according to the present invention, it is possible to observe the rapid and uniform release of bubbles with a controlled diameter throughout the liquid mass.

From the tests conducted using the device according to the invention for must and wine, it has been found surprisingly that not only is clarification more efficient, but also the time necessary for the gas bubbles to be released and to rise to the surface of the liquid inside the clarification apparatus is reduced appreciably.

Even though the precise reason for this effect is not known, it seems plausible to conclude that with the device according to the invention it is possible to achieve not only a uniform distribution of the gas in the liquid, but also control of the dimensions of the gas bubbles during formation thereof.

Obviously conceptually and mechanically equivalent modifications and variations are possible and may be envisaged without departing from the scope of the invention.

For example, the head 32 of the obturator may have a semi-spherical rather than a frustoconical configuration, favouring the flow of the liquid inside the passage 42.

The configuration of the internal chambers 21 and 24 of the device may also be similarly varied, for example in order to produce greater turbulence and/or impart to the incoming liquid flow specifically defined paths.

## Claims

1. Device for homogenizing and diffusing liquids to be clarified by means of the flotation process, comprising an external casing (2) inside which a flow path of the liquid between an inlet (20) and an outlet (26) is defined, characterized in that it comprises an obturator (3, 30, 31, 32) which is resiliently supported opposite this outlet in order to adjust the outflow of the liquid.

2. Homogenizing and diffusing device according to Claim 2, in which the obturator (3) is supported in an adjustable manner.

3. Homogenizing and diffusing device according to Claims 1 and 2, in which a plurality of channels (33) for the outflow of the liquid are formed in the obturator.

4. Homogenizing and diffusing device according to any one of Claims 1, 2 and 3, in which the obturator (3) consists of a stem (30) passing through the casing (2) and having a first threaded end (31) situated outside this casing and a head (32) at the opposite end inside said casing, and in which a spring (40) is arranged around the stem which is compressed between the casing and a nut (41) mounted on the threaded end.

5. Homogenizing and diffusing device according to Claim 4, in which the outflow channels (33) present in the obturator (3) are formed in the head (32).

6. Homogenizing and diffusing device according to Claims 4 and 5, in which the head (32) of the obturator (3) is frustoconical.

7. Homogenizing and diffusing device according to any one of the preceding claims, in which the path of the liquid inside the casing (2) comprises an annular chamber (21) adjacent to the inlet (20) and a cavity (24) communicating, on one side, therewith by means of one or more openings (25) and adjacent, on another side, to the seat (22) seating the head (32) of the obturator (3).

8. Homogenizing and diffusing device according to Claim 4, characterized in that said spring (40) is calibrated so that, in the working condition subject to the pressure of the liquid entering the head (32) of said obturator, it is displaced with respect to the seat (22) so as to create an annular passage (42) for outflow of the liquid.
